# EUROPÄISCHE PATENTSCHRIFT

(11) **EP 2 058 190 B1**
(45) Veröffentlichungstag und Bekanntmachung des Hinweises auf die Patenterteilung: **08.08.2012**
(21) Anmeldenummer: 08105338.1
(22) Anmeldetag: 15.09.2008
(51) Int. Cl.: B60T 8/1755, B60T 8/17, B60T 8/24

(54) **Fahrerassistenzsystem für Kraftfahrzeuggespanne**
Driver assistance system for tractor-trailer combinations
Système d'assistance à la conduite pour des combinaisons véhicule tracteur-remorque

(30) Priorität: 06.11.2007 DE 102007052759
(43) Veröffentlichungstag der Anmeldung: 13.05.2009
(73) Patentinhaber: Robert Bosch GmbH, 70442 Stuttgart (DE)
(72) Erfinder: Hoetzer, Dieter, Farmington Hills, 48331 (US); Pelosse, Jean-Francois, Farmington Hills, 48331 (US)

(56) Entgegenhaltungen:
- WO-A-2006/005652
- DE-A1- 10 031 266
- DE-A1- 19 901 953
- DE-C1- 4 136 571

## Beschreibung

### Stand der Technik

Die Erfindung betrifft ein Fahrerassistenzsystem für Kraftfahrzeuggespanne mit einem Zugfahrzeug und mindestens einem Anhänger, mit einer Sensoreinrichtung zur Erfassung der Dynamik des Anhängers, einer elektronischen Auswerteeinrichtung zur Auswertung der Daten der Sensoreinrichtung, und einer Ausgabeeinrichtung zur Ausgabe eines Instabilitätssignals, das eine von der Auswerteeinrichtung festgestellte dynamische Instabilität des Anhängers anzeigt, sowie mit mindestens einer Assistenzfunktion, die unter bestimmten Bedingungen automatisch einen Bremsvorgang auslöst und steuert.

Bei Kraftfahrzeuggespannen hat der Anhänger je nach Fahrgeschwindigkeit, Seitenwindverhältnissen, Bereifung und Zuladung eine mehr oder minder ausgeprägte Tendenz zu einer dynamischen Instabilität, die als "Trailer Swings" bezeichnet wird und sich darin äußert, daß er Anhänger nach rechts und links um die Verlängerung der Mittelachse des Zugfahrzeugs pendelt.

Aus WO 2006/005652 und DE 199 01 953 A1 sind Fahrerassistenzsysteme der eingangs genannten Art bekannt, bei denen die Instabilität des Anhängers fortlaufend gemessen wird und, wenn sie einen zulässigen Wert überschreitet, automatisch ein Bremsvorgang ausgelöst wird, um das Gespann unter eine kritische Geschwindigkeit zu bringen, bei der die Pendelschwingungen wieder abklingen.

Die Sensoreinrichtung zur Erfassung der Instabilität wird beispielsweise durch zwei Ultraschallsensoren gebildet, die in unterschiedlichen Querpositionen im Heck des Zugfahrzeugs eingebaut sind und jeweils den Abstand zum Anhänger messen. Durch Vergleich der von den verschiedenen Ultraschallsensoren erhaltenen Abstandssignale läßt sich dann die aktuelle Schrägstellung der Front des Anhängers in Bezug auf das Zugfahrzeug erfassen, so daß Schwingungen des Anhängers festgestellt werden können.

Für Kraftfahrzeuge sind auch elektronische Fahrerassistenzsysteme bekannt, mit denen es beispielsweise möglich ist, mit Hilfe eines Radarsensors den Abstand zu einem vorausfahrenden Fahrzeug zu messen und auf dieser Grundlage die Geschwindigkeit des eigenen Fahrzeugs so zu regeln, daß das vorausfahrende Fahrzeug in einem angemessenen Sicherheitsabstand verfolgt wird (ACC; Adaptive Cruise Control). Andere Fahrerassistenzsysteme dienen dazu, eine bevorstehende Kollision mit einem anderen Fahrzeug zu erkennen und dann automatisch eine Notbremsung auszulösen, damit die Kollision abgewendet oder zumindest deren Folgen gemildert werden können. Auch diese Typen von Fahrerassistenzsystemen weisen eine Assistenzfunktion auf, die unter bestimmten Bedingungen automatisch einen Bremsvorgang auslöst und steuert.

### Offenbarung der Erfindung

Aufgabe der Erfindung ist es, ein Fahrerassistenzsystem für Gespanne zu schaffen, durch das eine erhöhte Sicherheit bei automatisch ausgelösten Bremsvorgängen erreicht wird.

Diese Aufgabe wird erfindungsgemäß dadurch gelöst, daß die Assistenzfunktion dazu ausgebildet ist, einen Bremsvorgang im Rahmen einer automatischen Abstandsregelung oder im Rahmen einer automatischen Notbremsung automatisch auszulösen und den Betrag der Verzögerung des Fahrzeugs während dieses Bremsvorgangs auf einen von dem Instabilitätssignal abhängigen Wert zu begrenzen.

Wenn zu einem Zeitpunkt, zu dem sich der Anhänger bereits einen instabilen Zustand befindet, automatisch ein Bremseingriff mit hoher Bremsverzögerung ausgelöst wird, beispielsweise eine Notbremsung, so kann dadurch die Instabilität noch verstärkt werden, bis der Anhänger schließlich ausbricht. Der dadurch entstehende Schaden kann größer sein als der Schaden, der durch die Notbremsung verhindert werden soll.

Erfindungsgemäß wird nun das Signal, das die Instabilität des Anhängers anzeigt, dazu genutzt, bei dem automatisch ausgelösten Bremsvorgang die Verzögerung, also die negative Absolutbeschleunigung, auf einen Wert zu begrenzen, bei dem sich die Schlingerbewegungen des Anhängers nicht weiter aufbauen und nicht zum Ausbrechen des Anhängers führen.

In einigen Ländern sind die Anhänger von Lkw-Gespannen generell mit ESP-Systemen ausgerüstet, die auch unabhängig von dem hier vorgeschlagenen Fahrerassistenzsystem in der Lage sind, die Dynamik des Anhängers bei hohen Bremsverzögerungen zu stabilisieren, beispielsweise bei Notbremsungen mit einer Beschleunigung von -5 m/s² oder weniger. In den Fällen würde das erfindungsgemäße System allenfalls bei Funktionsstörungen des ESP-Systems in Funktion treten.

In anderen Ländern sind jedoch die Stabilitätssysteme für Anhänger nicht so weit entwickelt oder gar nicht vorhanden, so daß es dort bisher notwendig ist, die Verzögerung des Zugfahrzeugs auf einen bestimmten Mindestwert für die Beschleunigung, beispielsweise auf -2 m/s² zu begrenzen. Selbst dann kann es bei schlechter Fahrbahnhaftung, beispielsweise auf regen- oder eisglatter Fahrbahn noch zu einem Ausbrechen des Anhängers kommen, u.U. schon ab Beschleunigungen unterhalb von 0,5 m/s².

Die Erfindung bietet den wesentlichen Vorteil, daß das Ausbrechen des Anhängers verhindert werden kann, ohne daß ein Grenzwert für die Verzögerung fest vorgegeben werden muß, und unabhängig von dem Vorhandensein oder Nichtvorhandensein bzw. der Leistungsfähigkeit eines elektronischen Stabilitätssystems oder ABS-Systems für den Anhänger. Bei der Konfiguration von Fahrerassistenzsystemen für Lkw braucht dann nicht mehr zwischen den vorgesehenen Einsatzgebieten der Lkw unterschieden zu werden, da das erfindungsgemäße Fahrerassistenzsystem die Bremsverzögerung jeweils so beeinflußt, daß bei automatisch ausgelösten Bremsvorgängen die größtmögliche Bremsverzögerung zur Verfügung steht, bei der es noch nicht zu einem Ausbrechen des Anhängers kommt.

Vorteilhafte Weiterbildungen und Ausgestaltungen der Erfindung sind in den Unteransprüchen angegeben.

Die Sensoreinrichtung zur Erfassung der Dynamik des Anhängers kann alternativ oder zusätzlich zu den erwähnten Ultraschallsensoren auch andere Abstandssensoren sowie verschiedene andere Sensortypen umfassen, beispielsweise Längs und Querbeschleunigungssensoren, Giergeschwindigkeitssensoren und dergleichen, die im Anhänger eingebaut und elektrisch mit der Auswerteeinrichtung im Zugfahrzeug verbunden sind.

Bevorzugt wird aus den Daten der Sensoreinrichtung eine Größe abgeleitet, die das Ausmaß des Schlingerns des Anhängers angibt, und diese Größe wird mit einem oder mehreren festen oder variablen Schwellenwerten verglichen, und bei Überschreitung eines Schwellenwertes wird die erlaubte Bremsverzögerung für autonome Bremsvorgänge entsprechend begrenzt. Die Schwellenwerte können dabei von den dynamischen Daten des Zugfahrzeugs abhängig sein, beispielsweise von dessen Geschwindigkeit, vom detektierten Reibungskoeffizienten der Fahrbahn und dergleichen.

Das erfindungsgemäße System kann auch während der Fahrt ständig aktiv sein, um dem Fahrer eine Rückmeldung über die Schlingerneigung des Anhängers zu geben. Dabei sollten dann jedoch auch dynamische Daten des Zugfahrzeugs berücksichtigt werden, die insbesondere eine Kurvenfahrt anzeigen, da bei einer Kurvenfahrt naturgemäß eine Schrägstellung des Anhängers in Bezug auf das Zugfahrzeug auftritt, ohne daß dies auf ein Schlingern des Anhängers hindeutet.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Figur 1: ein Blockdiagramm eines erfindungsgemäßen Fahrerassistenzsystems;
- Figur 2: eine Prinzipskizze eines Kraftfahrzeuggespanns mit einem erfindungsgemäßen Fahrerassistenzsystem; und
- Figur 3: ein Diagramm zur Erläuterung der Funktionsweise des Fahrerassistenzsystems.

### Ausführungsformen der Erfindung

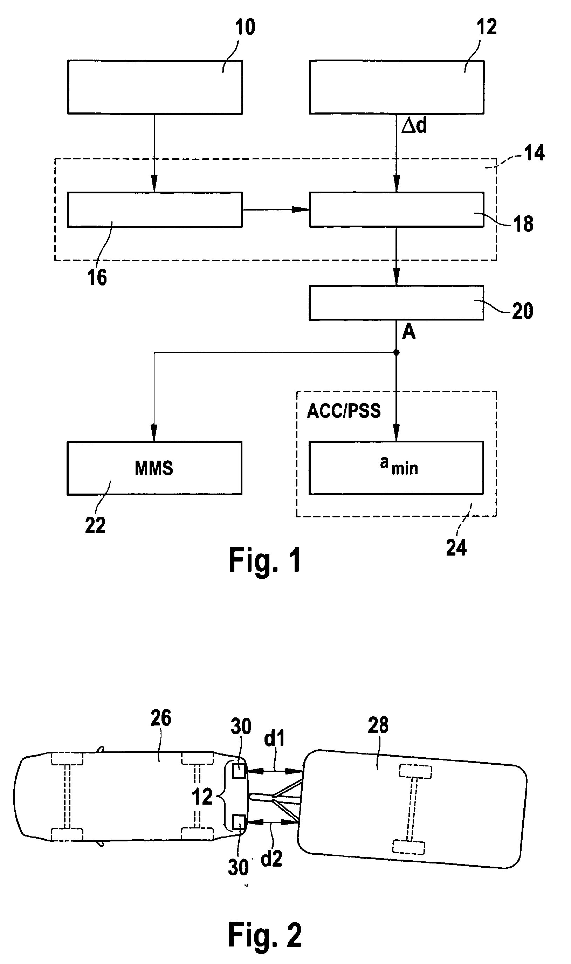

Das in Figur 1 als Blockdiagramm dargestellte Fahrerassistenzsystem ist speziell für Kraftfahrzeuggespanne mit einem Zugfahrzeug und mindestens einem Anhänger vorgesehen. Es umfaßt eine erste Sensoreinrichtung 10 zur Erfassung der dynamischen Daten des Zugfahrzeugs. Diese Sensoreinrichtung entspricht der Sensorik herkömmlicher Fahrerassistenzsysteme, die bei Einzelfahrzeugen zur Abstandsregelung oder zur Auslösung von Notbremsungen dienen, und erfaßt beispielsweise die Geschwindigkeit, die Giergeschwindigkeit, den Lenkradeinschlag und dergleichen des Zugfahrzeugs. Davon unabhängig dient bei dem erfindungsgemäßen System eine zweite Sensoreinrichtung 12 zur Erfassung von dynamischen Daten des Anhängers und zwar insbesondere von dynamischen Daten, die auf eine Schlingerbewegung und eine Tendenz zum Ausbrechen des Anhängers hindeuten. Im gezeigten Beispiel werden diese Daten durch eine Größe Δd repräsentiert, deren Bedeutung weiter unten näher erläutert werden wird.

Eine elektronische Auswerteeinrichtung 14, die beispielsweise durch einen speziellen Mikrocomputer oder eine spezielle Software für ein Datenverarbeitungssystem gebildet wird, das auch andere Assistenzfunktionen übernimmt, umfaßt ein Schwellenwertmodul 16 sowie ein Vergleichsmodul 18. Im Vergleichsmodul 18 wird die von der zweiten Sensoreinrichtung 12 gelieferte Größe Δd mit Schwellenwerten verglichen, die vom Schwellenwertmodul 16 in Abhängigkeit von den dynamischen Daten des Zugfahrzeugs, insbesondere in Abhängigkeit von dessen Geschwindigkeit, berechnet werden. Wenn Δd (dem Betrage nach) oberhalb des Schwellenwertes liegt, veranlaßt das Vergleichsmodul 18 eine Ausgabeeinrichtung 20 dazu, ein Signal A auszugeben, das auf die Gefahr hinweist, daß der Anhänger auszubrechen droht. Dieses Signal A kann beispielsweise über ein Display oder einen Lautsprecher einer Mensch/Maschine-Schnittstelle 22 dem Fahrer mitgeteilt werden, so daß der Fahrer den Anhänger wieder stabilisieren kann.

Das hier vorgeschlagene Fahrerassistenzsystem weist Assistenzfunktionen 24 auf, die eine automatische Abstandsregelung (ACC; Adaptive Cruise Control) oder eine automatische Auslösung von Notbremsungen (PSS; Predictive Safety System) erlauben. Dieses ACC-PSS-System ist somit in der Lage, in die Bremsanlage des Zugfahrzeugs (und ggf. auch die des Anhängers) einzugreifen. Die (negative) Sollbeschleunigung, die während eines autonomen, d.h., automatisch ausgelösten Bremsvorgangs auftreten darf, wird auf einen Wert aₘᵢₙ begrenzt. Die Ausgabe des Signals A durch die Ausgabeeinrichtung 20 bewirkt nun bei den Assistenzfunktionen 24 eine Anhebung des (negativen) Wertes a_{min'} so daß in Anbetracht der Instabilität des Anhängers durch die Begrenzung der Fahrzeugverzögerung ein Ausbrechen des Anhänger verhindert werden kann.

In Figur 2 sind schematisch die Grundrisse eines Zugfahrzeugs 26 und eines Anhängers 28 eines Gespanns dargestellt. Die zweite Sensoreinrichtung 12 wird hier durch zwei Ultraschallsensoren 30 gebildet, die auf der linken und rechten Seite am Heck des Zugfahrzeugs 26 eingebaut und nach hinten gerichtet sind. Bei diesen Ultraschallsensoren 30 kann es sich beispielsweise um Ultraschallsensoren handeln, die zu einer ohnehin vorhandenen Einpark- oder Rangierhilfe für das Zugfahrzeug 26 gehören, so daß für das erfindungsgemäße System praktisch keine zusätzlichen Kosten entstehen. Die Ultraschallsensoren 30 messen nun jeweils den Abstand d1 bzw. d2 zur Front des Anhängers 28. Wenn der Anhänger nicht exakt parallel zum Zugfahrzeug ausgerichtet ist, wie es beispielsweise bei einem Pendeln des Anhängers (Trailer Swing) der Fall ist, so unterscheiden sich die von den beiden Ultraschallsensoren 30 gemessenen Abstände d1 und d2. Die Größe Δd = d1 - d2 ist deshalb ein Maß für die "Pendelamplitude" des Anhängers 28.

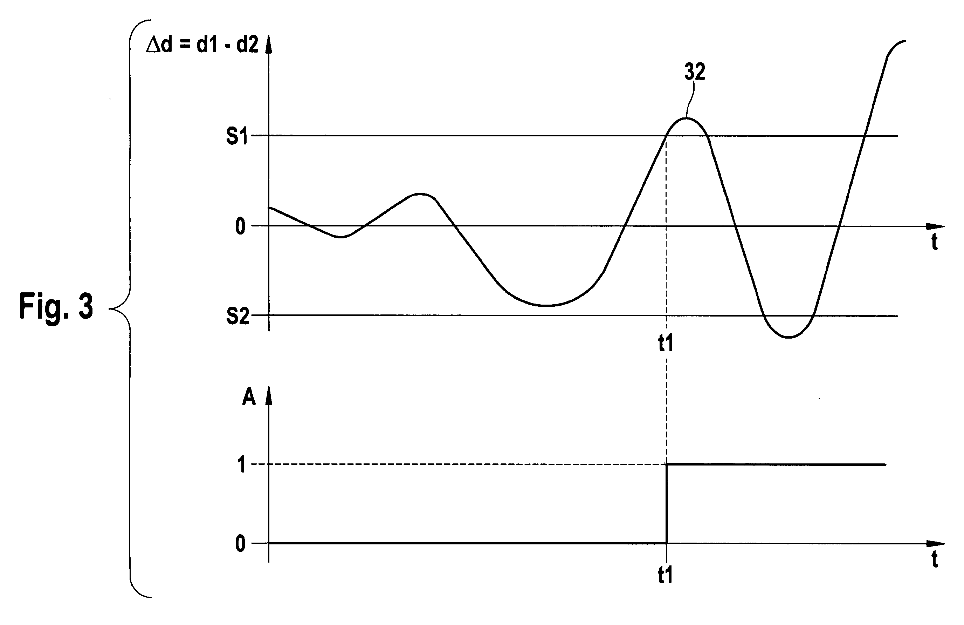

In Figur 3 gibt die Kurve 32 die Änderungen der Größe Δd in Abhängigkeit von der Zeit t für eine typische Situation an, in der sich während der Fahrt die Schlingerbewegungen des Anhängers 28 aufschaukeln. Außerdem sind als waagerechte Linien ein oberer Schwellwert S1 und ein unterer Schwellenwert S2 eingezeichnet, die vom Schwellenwertmodul 16 berechnet wurden. Bei Geradeausfahrt werden die Schwellenwerte S1 und S2 dem Betrage nach übereinstimmen, und sie werden nur von der Geschwindigkeit des Zugfahrzeugs 26 abhängig sein. Gegebenenfalls können sie sie jedoch auch von dem Reibungskoeffizienten der Fahrbahn abhängig sein, sofern sich dieser mit Hilfe eines ESP-Systems des Zugfahrzeugs 26 feststellen läßt.

Im gezeigten Beispiel bleibt die Kurve 32 zunächst innerhalb des durch die Schwellenwerte S1 und S2 begrenzten Bereiches, doch schaukeln die Schwingungen des Anhängers sich allmählich auf, bis die Kurve 32 schließlich zum Zeitpunkt t1 den oberen Schwellwert S1 überschreitet. Zu diesem Zeitpunkt t1 wird deshalb durch die Ausgabeeinrichtung 20 das Signal A an das Fahrerassistenzsystem 24 (und ggf. an die Mensch/Maschine-Schnittstelle 22) ausgegeben. Im Fahrerassistenzsystem 24 wird dann der Grenzwert aₘᵢₙ für die zulässige Fahrzeugverzögerung beispielsweise auf -2 m/s² angehoben. Das Signal A kann je nach Ausführungsform nach einer gewissen Hysteresezeit wieder auf logisch "0" abfallen oder bis zum Abschalten der Zündung auf logisch "1" bleiben.

Wenn irgendwann nach dem Zeitpunkt t1, also in einer Phase hoher Instabilität des Anhängers, von einer der Assistenzfunktionen 24 autonom ein Bremsvorgang ausgelöst wird, wird die Begrenzung der Verzögerung auf aₘᵢₙ sicherstellen, daß der Anhänger nicht ausbricht.

Bei höherer Fahrgeschwindigkeit werden die Schwellenwerte S1 und S2 dem Betrage nach kleiner sein, so daß das Signal A entsprechend früher ausgegeben wird. Selbstverständlich ist es auch möglich, mehrere Schwellenwerte oder Paare von Schwellenwerten vorzusehen, die nacheinander zu einer stufenweisen Anhebung des Grenzwertes aₘᵢₙ führen.

In einer nicht gezeigten, modifizierten Ausführungsform, kann die Auswerteeinrichtung 14 anhand der Daten der ersten Sensoreinrichtung 10 auch die Krümmung des aktuellen Fahrkurses des Gespanns detektieren und daraus den Wert von Δd berechnen, der dieser Krümmung entspricht. Die mit der zweiten Sensoreinrichtung 12 gemessene Größe Δd kann dann um diesen durch die Kurvenfahrt bedingten Wert korrigiert werden. In dem Fall kann die korrigierte "Pendelamplitude" dem Fahrer auch fortlaufend angezeigt werden oder sie kann aufgezeichnet werden, so daß der Fahrer eine Rückmeldung über das Stabilitätsverhalten des Anhängers 28 erhält und ggf. bei unzureichendem Stabilitätsverhalten eine Wartung der Bremsanlage des Anhängers oder dergleichen veranlassen kann.

Im gezeigten Beispiel wurde das Fahrerassistenzsystem für den Fall eines Gespanns mit nur einem Anhänger beschrieben. Das System läßt sich jedoch analog auch bei Gespannen mit zwei oder mehr Anhängern einsetzen, wobei dann jeweils der letzte Anhänger des Gespanns an die Stelle des Anhängers 28 in Figur 1 tritt, während die Sensoreinrichtung 12 mindestens am vorletzten Anhänger angebracht ist.

## Patentansprüche

1. Fahrerassistenzsystem für Kraftfahrzeuggespanne mit einem Zugfahrzeug und mindestens einem Anhänger, mit einer Sensoreinrichtung (12) zur Erfassung der Dynamik des Anhängers, einer elektronischen Auswerteeinrichtung (14) zur Auswertung der Daten der Sensoreinrichtung (12), und einer Ausgabeeinrichtung (20) zur Ausgabe eines Instabilitätssignals (A), das eine von der Auswerteeinrichtung (14) festgestellte dynamische Instabilität des Anhängers (28) anzeigt, sowie mit mindestens einer Assistenzfunktion, die unter bestimmten Bedingungen automatisch einen Bremsvorgang auslöst und steuert, **dadurch gekennzeichnet, daß** die Assistenzfunktion dazu ausgebildet ist, einen Bremsvorgang im Rahmen eine automatischen Abstandsregelung oder im Rahmen einer automatischen Notbremsung automatisch auszulösen, und den Betrag der Verzögerung des Fahrzeugs während dieses Bremsvorgangs auf einen von dem Instabilitätssignal (A) abhängigen Wert (aₘᵢₙ) zu begrenzen.

2. Fahrerassistenzsystem nach Anspruch 1, **dadurch gekennzeichnet, daß** die Sensoreinrichtung (12) dazu eingerichtet ist, eine Größe (Δd) zu bestimmen, die für die Tendenz des Anhängers (28) zum Ausbrechen repräsentativ ist, und daß die Auswerteeinrichtung (14) ein Vergleichsmodul (18) zum Vergleich dieser Größe (Δd) mit einem Schwellenwert (S1, S2) und zur Aktivierung der Ausgabeeinrichtung (20) in Abhängigkeit vom Vergleichsergebnis aufweist.

3. Fahrerassistenzsystem nach Anspruch 2, **dadurch gekennzeichnet, daß** die Auswerteeinrichtung (14) dazu ausgebildet ist, die Schwellenwerte (S1, S2) in Abhängigkeit von dynamischen Größen des Zugfahrzeugs (26) zu variieren.

4. Fahrerassistenzsystem nach einem der vorstehenden Ansprüche, **gekennzeichnet durch** eine Mensch/Maschine-Schnittstelle (22) zur Ausgabe des von der Ausgabeeinrichtung (20) erzeugten Signals (A) an den Fahrer.

5. Fahrerassistenzsystem nach einem der vorstehenden Ansprüche, **dadurch gekennzeichnet, daß** die Sensoreinrichtung (12) mindestens zwei Abstandssensoren aufweist, die so am Zugfahrzeug (26) und/oder am Anhänger (28) angeordnet sind, daß sie in zwei unterschiedlichen Querpositionen den Abstand (d1, d2) zwischen dem Heck des Zugfahrzeugs (26) und der Front des Anhängers (28) messen.

6. Fahrerassistenzsystem nach Anspruch 5, **dadurch gekennzeichnet, daß** die Abstandssensoren (30) Ultraschallsensoren sind.

7. Fahrerassistenzsystem nach Anspruch 5 oder 6, **dadurch gekennzeichnet, daß** die Auswerteeinrichtung (14) dazu ausgebildet ist, anhand dynamischer Daten des Zugfahrzeugs (26) die Krümmung des von dem Gespann befahrenen Kursus zu berechnen und die Differenz der von den Abstandssensoren (30) gemessenen Abstände (d1, d2) um den Anteil zu korrigieren, der durch die Kurskrümmung bedingt ist, und die korrigierte Differenz als die Größe (Δd) auszugeben, die für die Tendenz des Anhängers (28) zum Ausbrechen repräsentativ ist.

## Claims

1. Driver assistance system for tractor-trailer combinations having a tractor vehicle and at least one trailer, having a sensor device (12) for sensing the dynamics of the trailer, an electronic evaluation device (14) for evaluating the data of the sensor device (12) and an output device (20) for outputting an instability signal (A) which indicates dynamic instability of the trailer (28) detected by the evaluation device (14), and having at least one assistance function which automatically triggers and controls a braking process under certain conditions, **characterized in that** the assistance function is designed to automatically trigger a braking process within the scope of an automatic adaptive cruise control process or within the scope of an automatic emergency braking process and to limit the absolute value of the deceleration of the vehicle during this braking process to a value (aₘᵢₙ) which is dependent on the instability signal (A).

2. Driver assistance system according to Claim 1, **characterized in that** the sensor device (12) is configured to determine a variable (Δd) which is representative of the tendency of the trailer (20) to veer, and **in that** the evaluation device (14) has a comparison module (18) for comparing this variable (Δd) with a threshold value (S1, S2) and for activating the output device (20) as a function of the comparison result.

3. Driver assistance system according to Claim 2, **characterized in that** the evaluation device (14) is designed to vary the threshold values (S1, S2) as a function of dynamic variables of the tractor vehicle (26).

4. Driver assistance system according to one of the preceding claims, **characterized by** a man/machine interface (22) for outputting to the driver the signal (A) which is generated by the output device (20).

5. Driver assistance system according to one of the preceding claims, **characterized in that** the sensor device (12) has at least two distance sensors which are arranged on the tractor vehicle (26) and/or on the trailer (28) in such a way that in two different lateral positions said distance sensors measure the distance (d1, d2) between the rear of the tractor vehicle (26) and the front of the trailer (28).

6. Driver assistance system according to Claim 5, **characterized in that** the distance sensors (30) are ultrasonic sensors.

7. Driver assistance system according to Claim 5 or 6, **characterized in that** the evaluation device (14) is designed to calculate the curvature of the course travelled along by the tractor-trailer combination on the basis of dynamic data of the tractor vehicle (26) and to calculate the difference between the distances (d1, d2) measured by the distance sensors (30), in order to correct the proportion due to the curvature of the course and to output the corrected difference as the variable (Δd) which is representative of the tendency of the trailer (28) to veer.

## Revendications

1. Système d'assistance au conducteur pour convois de véhicules automobiles qui présentent un véhicule tracteur et au moins une remorque, le système présentant :
un dispositif de détection (12) qui détecte la dynamique de la remorque,
un dispositif électronique d'évaluation (14) qui évalue les données du dispositif de détection (12),
un dispositif d'émission (20) qui émet un signal d'instabilité (A) qui indique qu'une instabilité dynamique de la remorque (28) a été constatée par le dispositif d'évaluation (14) et
au moins une fonction d'assistance qui, dans des conditions données, déclenche et commande automatiquement une opération de freinage,
**caractérisé en ce que**
la fonction d'assistance est configurée pour déclencher automatiquement une opération de freinage dans le cadre d'une régulation automatique de la distance ou dans le cadre d'un freinage automatique d'urgence et de limiter pendant cette opération de freinage le niveau du ralentissement du véhicule à une valeur (aₘᵢₙ) qui dépend du signal d'instabilité (A).

2. Système d'assistance au conducteur selon la revendication 1, **caractérisé en ce que** le dispositif de détection (12) est conçu pour déterminer une grandeur (Δd) qui est représentative de la tendance de la remorque (28) à partir en embardées et **en ce que** le dispositif d'évaluation (14) présente un module de comparaison (18) qui compare cette grandeur (Δd) à une valeur de seuil (S1, S2) et qui active le dispositif d'émission (20) en fonction du résultat de la comparaison.

3. Système d'assistance au conducteur selon la revendication 2, **caractérisé en ce que** le dispositif d'évaluation (14) est conçu pour faire varier les valeurs de seuil (S1, S2) en fonction de grandeurs dynamiques du véhicule tracteur (26).

4. Système d'assistance au conducteur selon l'une des revendications précédentes, **caractérisé par** une interface (22) homme-machine qui délivre au conducteur le signal (A) formé par le dispositif d'émission (20).

5. Système d'assistance au conducteur selon l'une des revendications précédentes, **caractérisé en ce que** le dispositif de détection (12) présente au moins deux détecteurs de distance disposés sur le véhicule tracteur (26) et/ou sur la remorque (28) de manière à mesurer la distance (d1, d2) entre l'arrière du véhicule tracteur (26) et l'avant de la remorque (28) en deux positions transversales différentes.

6. Système d'assistance au conducteur selon la revendication 5, **caractérisé en ce que** les détecteurs de distance (30) sont des détecteurs à ultrasons.

7. Système d'assistance au conducteur selon les revendications 5 ou 6, **caractérisé en ce que** le dispositif d'évaluation (14) est conçu pour calculer à l'aide de données dynamiques du véhicule tracteur (26) la courbure de la trajectoire parcourue par le convoi, pour corriger la différence entre les distances (d1, d2) mesurées par les détecteurs de distance (30) de la fraction qui résulte par la courbure de la trajectoire et pour délivrer la différence corrigée en tant que grandeur (Δd) représentative de la tendance de la remorque (28) à partir en embardées.
